# EUROPÄISCHE PATENTSCHRIFT

(11) **EP 3 158 773 B1**
(45) Veröffentlichungstag und Bekanntmachung des Hinweises auf die Patenterteilung: **27.03.2019**
(21) Anmeldenummer: 15720575.8
(22) Anmeldetag: 23.04.2015
(51) Int. Cl.: H04Q 9/00, H01Q 1/27

(54) **MESSVORRICHTUNG UND VERFAHREN ZUM TELEMETRISCHEN ÜBERTRAGEN VON MESSDATEN VON EINER MESSEINHEIT AN EINEM BEWEGTEN SYSTEM ZU EINER BASISSTATION**
MEASUREMENT DEVICE AND METHOD FOR TELEMETRIC TRANSMISSION OF MEASUREMENT DATA FROM A MEASUREMENT UNIT ON A MOBILE SYSTEM TO A BASE STATION
DISPOSITIF DE MESURE ET PROCÉDÉ DE TRANSMISSION TÉLÉMÉTRIQUE DE DONNÉES DE MESURE D'UNE UNITÉ DE MESURE SUR UN SYSTÈME MOBILE À UNE STATION DE BASE

(30) Priorität: 22.05.2014 CH 785142014
(43) Veröffentlichungstag der Anmeldung: 26.04.2017
(73) Patentinhaber: Kistler Holding AG, 8408 Winterthur (CH)
(72) Erfinder: BUSSLINGER, Bruno, 8460 Marthalen (CH)
(86) Internationale Anmeldenummer: PCT/CH2015/000061
(87) Internationale Veröffentlichungsnummer: WO 2015/176189

(56) Entgegenhaltungen:
- WO-A1-2010/009906
- DE-A1- 10 012 438
- US-A1- 2003 236 100

## Beschreibung

### Technisches Gebiet

Die Erfindung betrifft eine Vorrichtung, umfassend eine Messeinheit sowie eine Basisstation, und ein Verfahren zum Aufnehmen von Messsignalen mit der Messeinheit und zum telemetrischen Übertragen von Messdaten zur Basisstation, wobei für eine Messung die Basisstation stationär in einem Arbeitsraum angeordnet ist und die Messeinheit fest an einem System angebracht ist, das sich innerhalb dieses Arbeitsraums bewegt.

### Stand der Technik

Messdaten von einem bewegten System auf eine stationär in einem Arbeitsraum angeordnete Basisstation zu übertragen bereitet oft Schwierigkeiten, da oftmals keine Kabel verlegt werden können oder diese wegen den ständigen Bewegungen schnell brechen. Als bewegte Systeme werden rotierende oder sich drehende Systeme angesehen aber auch solche, die sich translatorisch hin und her bewegen, aber immer innerhalb des Arbeitsraums, beispielsweise wie ein Roboter, der einen Arm zum Verrichten einer Arbeit stets hin- und her bewegt. Sich in eine Richtung entfernende Systeme wie Fahrzeuge oder Personen, die unterwegs sind und sich von einem Arbeitsraum entfernen, werden für die vorliegende Erfindung nicht berücksichtigt, sondern nur solche, bei denen sich die Bewegung in einem abgegrenzten Gebiet, namentlich im Arbeitsraum bewegen. Insbesondere werden Systeme betrachtet, deren Bewegungsabläufe definiert und vorbestimmt sind.

So können sich die hier betrachteten bewegten Systeme relativ zur Basisstation bewegen aber den Abstand zur Basisstation nicht wesentlich verändern. Neben Übertragungsverfahren mit schleifenden Kontakten bei rotierenden Systemen hat sich insbesondere auch die Übertragung mit Telemetrie bewährt. Beispiele von Anwendungen sind rotierende Werkzeugsysteme, bei denen beispielsweise die Schnittkraft einer Schneide ermittelt werden soll, Turbinen, Walzen oder Fahrzeugräder. Während bei den meisten Anwendungen die Basisstationen in einem Arbeitsraum angeordnet sind, der selbst stationär ist, kann der Arbeitsraum auch eine Fahrzeugkombination sein, zum Ermitteln der Radkräfte von Fahrzeugrädern. Die Basisstationen bewegen sich zwar während einer Messung, aber innerhalb ihres Arbeitsgebiets sind sie stationär. Die Basisstationen bewegen sich in diesem Beispiel daher nicht gleich wie die jeweils dazugehörigen Messeinheiten.

Eine bekannte Messvorrichtung oben beschriebener Art ist in der EP1323495 beschrieben. Dieses Dokument beschreibt ein Verfahren zum Überwachen von Werkzeugen an einer Spindel mittels einer Sensoreinrichtung, wobei die erfassten Messdaten berührungslos auf einen Stator übertragen werden, der sie an einen Hauptprozessor weiterleitet. Zudem können Bereichsumstellungen an der Sensoreinrichtung durchgeführt werden, indem entsprechende Befehle vom Hauptprozessor aus über den Stator berührungslos zu einem Mikroprozessor der Sensoreinrichtung geschickt werden.

Nachteilig an der beschriebenen Anordnung ist der Umstand, dass die berührungslose Übertragung mittels Nahfeldtelemetrie erfolgt. Dies bedingt, dass jeweils nahe, also im Abstand von wenigen Millimetern, ein Stator angeordnet ist. Bei vielen Systemen, insbesondere bei rotierenden Werkzeugen und bei Robotern, die beispielsweise in der Materialbearbeitung oder in der Montage in Industrieunternehmen eingesetzt sind, hat sich dies als nachteilig erwiesen.

Eine andere bekannte Messvorrichtung ist in der US 2003/0236100 beschrieben.

### Darstellung der Erfindung

Aufgabe der vorliegenden Erfindung ist es, eine Vorrichtung und ein Verfahren zum Aufnehmen von Messsignalen an einem bewegten System zum Übertragen von Messdaten eingangs beschriebener Art anzugeben, wobei zum Übertragen der Daten kein Stator in unmittelbarer Nähe von der Messeinheit angeordnet sein muss zur Übertragung der Daten mittels Nahfeldtelemetrie. Zudem soll sicher gestellt sein, dass der berührungslose Datentransfer jeweils störungsfrei mit ausreichend Signalstärke ankommt.

Die Aufgaben werden durch eine Vorrichtung mit den Merkmalen des unabhängigen Vorrichtungsanspruchs und durch ein Verfahren mit den Merkmalen des unabhängigen Verfahrensanspruchs gelöst. Bevorzugte Ausführungen sind in den abhängigen Patentansprüchen beschrieben.

Zur Lösung der Aufgabe wird eine eingangs beschriebene Vorrichtung verwendet, wobei die Messeinheit mindestens einen oder mehrere Messkanäle aufweist, an denen ein oder mehrere Sensoren zum Erfassen von Messsignalen angeschlossen werden können oder angeschlossen sind. Zudem umfasst die Messeinheit eine elektronische Einheit mit einem ersten Prozessor zum Konditionieren und/oder Komprimieren der Messsignale zu Messdaten, eine erste Telemetrieeinheit und eine erste Antenne. Die erste Antenne kann Messdaten und vorzugsweise auch Statusinformationen senden sowie Konfigurations- und Steuerdaten empfangen. Die Basisstation umfasst eine Datenverarbeitungseinheit sowie eine zweite Antenne und eine zweite Telemetrieeinheit, zum Empfangen von Messdaten und vorzugsweise Statusinformationen und zum Senden von Konfigurations- und Steuerdaten.

Erfindungsgemäss ist die erste Antenne eine linear polarisierte Antenne und die zweite Antenne eine zirkular polarisierte Antenne oder umgekehrt. Entsprechend polarisiert im erfindungsgemässen Verfahren bei der telemetrischen Übertragung die erste Antenne die Messdaten linear und die zweite Antenne die Konfigurations- und Steuerdaten zirkular oder umgekehrt.

Es hat sich gezeigt, dass bei herkömmlichen Antennen die Ausrichtung der Antennen entscheidend ist für eine störungsfreie Übertragung von Daten mit ausreichend Signalstärke. Bei Nahfeldübermittlungen, wo die relative Anordnung der Antennen zueinander fest vorgegeben ist, ist die Übertragungsqualität nicht gefährdet. Bei Fernfeldtelemetrie jedoch wächst die Gefahr vom sogenannten Fading, Interferenzen mit anderen Funkdiensten, Abschattungen, Mehrwegausbreitungen und Doppler Effekt durch die Bewegung. Zudem schwächt sich das Signal merklich ab, wenn sich Personen im Raum zwischen Sende- und Empfangsantenne bewegen. Weitere Probleme werden durch Reflexionen der Signale im Raum verursacht.

Am wenigsten Verluste werden erzielt, wenn die Sende- und Empfangsantennen gleichartig sind. Dies ist der Fall, wenn demnach beide Antennen horizontal linear oder beide vertikal linear polarisiert sind, oder wenn beide zirkular rechtsdrehend oder zirkular linksdrehend sind. Dann treten jeweils keine Verluste auf, wenn die Übertragung direkt verläuft.

Bei horizontal und vertikal linearen Antennen reduzieren sich die Signale aber, sobald die Antennen nicht mehr parallel zueinander angeordnet sind. Dies ist der Fall, wenn beispielsweise eine Werkzeugmaschine, an dem das bewegte System angebracht ist, verschoben wird. Die Signalstärke verringert sich bis zu einem theoretischen Wert von null, wenn die Antennen senkrecht zueinander stehen. Praktisch wird ein Signalverlust von 20-30 dB registriert. Andererseits wandelt sich ein zirkular rechtsdrehendes Signal in ein zirkular linksdrehendes Signal, nachdem es an einer Wand reflektiert wurde. Auch in diesem Fall ist das zirkular linksdrehende Signal, das an der zirkular rechtsdrehenden Antenne empfangen werden kann, um 20-30 dB reduziert.

Es hat sich nun gezeigt, dass eine Mischform von Antennen eine stabile Datenübertragung gewährleistet. Wenn demnach eine der beiden Antennen eine (horizontal oder vertikal) linear polarisierte Antenne und die andere eine zirkular (rechtsdrehende oder linksdrehende) Antenne ist, so beträgt der Verlust 3 dB, was eine Halbierung der maximalen Signalstärke beträgt. Dieser Signalverlust kann kompensiert werden, indem die Leistung der Sendeantenne verdoppelt wird. In diesem Fall ist es unerheblich, ob und wie oft das Signal an einer Wand reflektiert wird. Ebenso unerheblich ist, wie die Antennen zueinander ausgerichtet sind. Auch andere Störfaktoren und Fading haben einen minimalen Einfluss. Es hat sich gezeigt, dass der Signaltransfer in beide Richtungen mit der Kombination von linear und zirkular polarisierten Antennen stabil ist, wenn auch um 3 dB reduziert.

### Kurze Beschreibung der Zeichnungen

Im Folgenden wird die Erfindung unter Beizug der Zeichnungen näher erklärt. Es zeigen
- Fig. 1: eine schematische Darstellung einer Messvorrichtung in einem Anwendungsbeispiel;
- Fig. 2a: eine erfindungsgemässe Messeinheit;
- Fig. 2b: Anordnung von Einzelantennen um die Messeinheit;
- Fig. 3: eine erfindungsgemässe Basiseinheit.

### Wege zur Ausführung der Erfindung

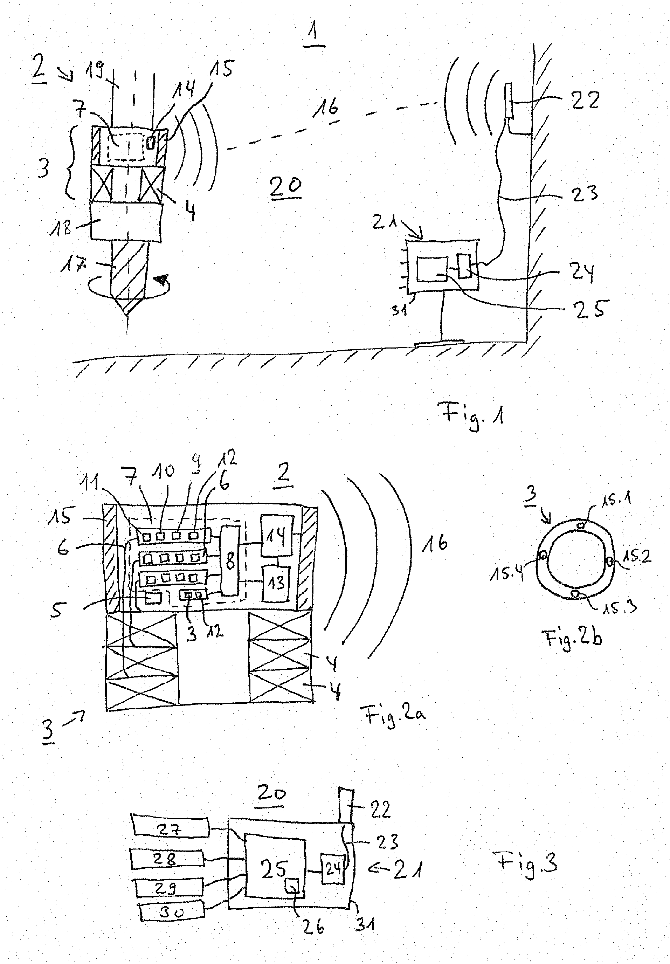

Die Fig. 1 zeigt ein Beispiel einer erfindungsgemässen Vorrichtung umfassend eine Messeinheit 3 sowie eine Basisstation 21 zum Aufnehmen von Messsignalen mit der Messeinheit 3 und zum telemetrischen Übertragen von Messdaten zur Basisstation 21, wobei für eine Messung die Basisstation 21 stationär in einem Arbeitsraum 20 angeordnet ist und die Messeinheit 3 fest an einem System 2 angebracht ist, das sich innerhalb dieses Arbeitsraums 20 bewegt.

Das bewegte System 2 ist in der Regel mit dem Arbeitsraum 20 verbunden und verlässt diesen bei einer Messung nicht. Als Arbeitsraum 20 kann insbesondere ein Industriegebäude oder eine Industrieanlage, eine Werkzeughalle, eine Montagehalle, eine Fabrikationsanlage oder dergleichen angesehen werden, wobei sich das System 2, beispielsweise ein Werkzeug oder ein Roboter, translatorisch und/oder rotativ innerhalb dieses Arbeitsraums 20 bewegen kann. Der Arbeitsraum 20 kann sich, beispielsweise als Fahrzeug ausgestaltet, aber auch selbst bewegen, wobei sich das System 2 während einer Messung relativ zum Arbeitsraum 20 bewegt, beispielsweise wie ein Rad eines solchen Fahrzeuges. Die Basisstation 21 ist in diesem Fall im oder am Fahrzeug angebracht, die Messeinheit 3 am Fahrzeugrad.

Die Messeinheit 3, detaillierter dargestellt in Fig. 2a, umfasst mindestens einen oder mehrere Messkanäle 6, an denen ein oder mehrere Sensoren 4 zum Aufnehmen von Messsignalen angeschlossen werden können oder angeschlossen sind und eine elektronische Einheit 7 mit einem ersten Prozessor 8 zum Konditionieren und/oder Komprimieren der Messsignale zu Messdaten. Als Prozessor 8 kann auch eine programmierbare Logik und/oder eine Kombination von Prozessoren und Logik verstanden werden. Zudem umfasst die Messeinheit 3 eine erste Telemetrieeinheit 14 sowie eine erste Antenne 15 zum Senden von Messdaten und zum Empfangen von Konfigurations- und Steuerdaten. Vorzugsweise werden von der ersten Antenne 15 auch Statusinformationen gesendet. Die erste Antenne 15 kann aus mehreren Einzelantennen 15.1-15.4 zusammengeschlossen sein, die um die Messeinheit 3 gleichmässig verteilt angeordnet sind. In Fig. 2b ist ein Beispiel mit vier solchen Einzelantennen 15.1-15.4 dargestellt.

Die Basisstation 21, detaillierter dargestellt in Fig. 3, umfasst eine zweite Antenne 22 und eine zweite Telemetrieeinheit 24 zum Empfangen von Messdaten und zum Senden von Konfigurations- und Steuerdaten. Von der ersten Antenne 15 gesendete Statusinformationen werden ebenfalls von der zweiten Antenne 22 empfangen. Die Basisstation 21 umfasst zudem eine Datenverarbeitungseinheit 25.

Die zweite Antenne 22 kann, wie in Fig. 1 dargestellt, vom Rest der Basisstation 21 getrennt angeordnet und mit dieser mit einer Verbindung 23 verbunden sein. Sie kann aber auch an oder in der Basisstation 21 angebracht sein, wie in Fig. 3 dargestellt.

Erfindungsgemäss ist die erste Antenne 15 eine linear polarisierte Antenne und die zweite Antenne 22 eine zirkular polarisierte Antenne oder umgekehrt. Bevorzugt ist die erste Antenne 15 eine linear polarisierte Antenne und die zweite Antenne 22 eine zirkular polarisierte Antenne. Dies hat mit der typischen Geometrie und Grösse der jeweiligen Antennen zu tun. Die kleinere Antenne ist demnach bevorzugt am bewegten System. Für die Qualität der Übertragung ist dies aber unerheblich. Beide Antennen 15, 22 sind Sender und Empfänger für Fernfeldtelemetrie 16, beispielsweise im Bereich zwischen 400 MHz und 70 GHz.

Im dargestellten Beispiel der Fig. 1 ist insbesondere ein Anwendungsbeispiel eines rotierenden Werkzeuges 17 dargestellt, das an einem Werkzeughalter 18 an einer Welle 19 angebracht ist und zusammen ein bewegten System 2 bildet, an dem die Messeinheit 3 angebracht ist. Andere Beispiele für bewegte Systeme, an denen die erfindungsgemässe Messeinheit 3 angebracht werden kann, sind unter anderem Turbinen, insbesondere von Kraftwerken, beispielsweise Wasserkraft- oder Windkraftanlagen, Wellen jeglicher Art, Walzen, insbesondere von Metall- und Papierverarbeitungsanlagen, Räder von Fahrzeugen, beispielsweise von Schienenfahrzeugen oder Motorfahrzeugen, oder Roboter, beispielsweise eingesetzt in Industrieunternehmen für Herstellung oder Montage von Teilen. Obwohl sich solche Roboter nicht wie andere genannte Beispiele permanent um eine vorgegebene Achse bewegen sondern sich vorwiegend translatorisch bewegen, lassen sich daran montierte Messeinheiten oft nicht mit Datenkabeln zu einer Basisstation im Arbeitsraum verbinden, ohne zu riskieren, dass die Kabel in kurzer Zeit brechen.

In einer bevorzugten Ausführung umfasse die Messeinheit 3 einen oder mehrere Sensoren 4, 5. Diese sind insbesondere als Kraft-, Druck-, Drehmoment-, Vorschubkraft-, Biegemoment-, Dehnungs-, Schwingungs-, Beschleunigungs- und/oder Temperatursensoren ausgestaltet. Daher ist es vorteilhaft, wenn der Sensor 4, 5 ein piezoelektrischer oder piezoresistiver Sensor, ein Dehnmessstreifen oder ein Thermoelement ist. Dementsprechend sind ein oder mehrere Messkanäle 6 zum Verarbeiten von Messsignalen ausgelegt, die von piezoelektrischen und/oder piezoresistiven Sensoren 4, 5, Dehnmessstreifen und/oder Thermoelementen stammen. Insbesondere können mehrdimensionale Sensoren 4 eingesetzt werden, die beispielsweise Kräfte in alle drei orthogonale Richtungen messen können oder Kombinationen von Kräften, Momenten Dehnungen, Schub und/oder Temperatur. Die Sensoren 4, 5 selbst können in der Messeinheit 3 integriert sein oder wahlweise an diese angeschlossen werden.

Jeder Kanal eines Sensors 4, 5 sollte mit einem eigenen Messkanal 6 verbunden sein, wie in Fig. 2a dargestellt. Vorzugsweise umfasst jeder Messkanal 6 der Messeinheit 3 einen AD-Wandler 9 zum Digitalisieren der Messdaten. Zudem können einzelne oder alle Messkanäle 6 eine Bereichsumschaltung 10 zum Anpassen des Messbereichs umfassen, wobei jede Bereichsumschaltung von der Basisstation her telemetrisch konfigurierbar ist. Manche Messkanäle 6 umfassen zudem eine Reset Funktion 11 zum Zurücksetzen des Messkanals 6 und/oder eine Start/Stopp Funktion 12 zum Starten und Stoppen einer Messung, wobei alle Funktionen 11, 12 von der Basisstation 21 her telemetrisch steuerbar sind. Die Messeinheit 3 kann aber auch weitere Sensoren 5 umfassen, welche keine Bereichsumschaltung 10 benötigen, beispielsweise Temperatursensoren 5.

Die Messeinheit 3 umfasst zudem ein Energieerzeugungssystem und/oder eine Energiespeichereinheit 13, insbesondere einen Kondensator mit grosser Kapazität und/oder eine aufladbare oder nicht aufladbare Batterie zum Speisen der elektronischen Einheit und der ersten Telemetrieeinheit 14. Das Energieerzeugungssystem kann ein System sein, welches auf Grund der Bewegung oder einer Temperaturdifferenz, welcher die Messeinheit 3 unterliegt, Energie erzeugen kann. Energie kann auch mittels einer Telemetrie auf die Messeinheit 3 übertragen werden.

Die Messeinheit 3 liefert zudem Daten über ihren Status. Dies kann insbesondere der Ladezustand eines Energiespeichers 13 betreffen, Bereichseinstellungen und andere Daten, auch sensorspezifische Daten wie Sensorempfindlichkeiten.

Die Datenverarbeitungseinheit 25, auch dargestellt in Fig. 3, umfasst einen zweiten Prozessor 26 zum Analysieren der Messdaten sowie zum telemetrischen Überprüfen, Konfigurieren, Bedienen und Steuern der Messeinheit. Vorzugsweise ist die zweite Telemetrieeinheit 24 zusammen mit der Datenverarbeitungseinheit 25 in einem Gehäuse 31 untergebracht, an oder in dem auch die zweite Antenne 22 angebracht ist. Die Datenverarbeitungseinheit 25 umfasst bevorzugt mindestens eine Schnittstelle zu einem Benutzer 27, einer Steuerung 28, einer Auswerteeinheit 29 und/oder einer Speichereinheit 30. Der zweite Prozessor 26 kann so programmiert sein, dass er selbständig Bereichsumschaltungen, Reset Funktionen und Start/Stopp Befehle veranlassen kann.

Für das erfindungsgemässe Verfahren wird eine Vorrichtung 1 in einer der oben beschriebenen Ausführungsvarianten verwendet. Gemäss dem erfindungsgemässen Verfahren zum Aufnehmen von Messsignale mit der Messeinheit 3 und zum telemetrischen Übertragen von Messdaten zur Basisstation 21 ist die Basisstation 3 stationär im Arbeitsraum 20 angeordnet und die Messeinheit 3 ist fest am System 2 angebracht, das sich innerhalb dieses Arbeitsraums 20 bewegt.

Die Messeinheit 3 erfasst zunächst die Messsignale mit dem mindestens einen Sensor 4, 5 der mit einem oder mehreren Messkanälen 6 verbunden ist. Anschliessend konditioniert und/oder komprimiert die elektronische Einheit 7 mit dem ersten Prozessor 8 die Messsignale zu Messdaten, die mittels der ersten Telemetrieeinheit 14 sowie der ersten Antenne 15 gesendet werden. Im selben Arbeitsraum 20 empfängt die Basisstation 21 mittels der zweiten Antenne 22 und der zweiten Telemetrieeinheit 24 die Messdaten, welche in der Datenverarbeitungseinheit 25 verarbeitet werden. Zudem werden Konfigurations- und Steuerdaten von der zweiten Telemetrieeinheit 24 über die zweite Antenne 22 auf die erste Antenne 15 zur ersten Telemetrieeinheit 14 gesendet.

Erfindungsgemäss werden bei der telemetrischen Übertragung die Messdaten und allfällige weitere Daten von der ersten Antenne 15 linear polarisiert und die Konfigurations- und Steuerdaten von der zweiten Antenne 22 zirkular polarisiert oder umgekehrt. Bevorzugt ist die erstgenannte Variante.

Vorzugsweise werden die Messsignale in einem AD Wandler 9 in der Messeinheit 3 digitalisiert. Zudem konfiguriert in einem bevorzugten Verfahren die Datenverarbeitungseinheit 25 mittels Telemetrie 16 eine Bereichsumschaltung 10 eines oder mehrerer Messkanäle 6. In einem weiteren bevorzugten Verfahren startet und/oder stoppt die Datenverarbeitungseinheit 10 mittels Telemetrie bevorzugt mindestens eine Messung an mindestens einen Messkanal 6 der Messeinheit 3 mittels der Start/stopp Funktion 12 und/oder setzt ihn mittels der Reset Funktion 11 zurück.

### Bezugszeichenliste

- 1: Vorrichtung zum Messen, Messvorrichtung
- 2: Bewegtes System
- 3: Messeinheit
- 4: Sensor
- 5: Weiterer Sensor
- 6: Messkanal
- 7: Elektronische Einheit
- 8: Erster Prozessor
- 9: AD Wandler
- 10: Bereichsumschaltung
- 11: Reset Funktion
- 12: Start/Stopp Funktion
- 13: Energieerzeugungssystem, Energiespeicher
- 14: Erste Telemetrieeinheit
- 15: Erste Antenne
15.1 ... 15.4 Einzelantennen
- 16: Telemetrie Daten
- 17: Werkzeug
- 18: Werkzeughalter
- 19: Welle
- 20: Arbeitsraum
- 21: Basisstation
- 22: Zweite Antenne
- 23: Verbindung
- 24: Zweite Telemetrieeinheit
- 25: Datenverarbeitungseinheit
- 26: Zweiter Prozessor
- 27: Benutzer
- 28: Steuerung
- 29: Auswerteeinheit
- 30: Speichereinheit
- 31: Gehäuse

## Patentansprüche

1. Vorrichtung umfassend eine Messeinheit (3) sowie eine Basisstation (21) zum Aufnehmen von Messsignalen mit der Messeinheit (3) und zum telemetrischen Übertragen von Messdaten zur Basisstation (21), wobei für eine Messung die Basisstation (3) stationär in einem Arbeitsraum (20) angeordnet ist und die Messeinheit (3) fest an einem System (2) angebracht ist, das sich innerhalb dieses Arbeitsraums (20) bewegt, und wobei die Messeinheit (3) mindestens einen oder mehrere Messkanäle (6) aufweist, an denen ein oder mehrere Sensoren (4, 5) zum Aufnehmen der Messsignale angeschlossen werden können oder angeschlossen sind, sowie eine elektronische Einheit (7) mit einem ersten Prozessor (8) zum Konditionieren und/oder Komprimieren der Messsignale zu Messdaten, eine erste Telemetrieeinheit (14) sowie eine erste Antenne (15) zum Senden von Messdaten und zum Empfangen von Konfigurations- und Steuerdaten umfasst, und wobei die Basisstation (21) eine zweite Antenne (22) und eine zweite Telemetrieeinheit (24) umfasst zum Empfangen der Messdaten und zum Senden der Konfigurations- und Steuerdaten, sowie eine Datenverarbeitungseinheit (25), **dadurch gekennzeichnet, dass** die erste Antenne (15) eine linear polarisierte Antenne und die zweite Antenne (22) eine zirkular polarisierte Antenne ist oder umgekehrt.

2. Vorrichtung nach Anspruch 1, **dadurch gekennzeichnet, dass** die Messeinheit (2) mindestens einen Sensor (4, 5) umfasst, wobei der Sensor (4, 5) ein Kraft-, Druck-, Drehmoment-, Vorschubkraft-, Biegemoment-, Dehnungs-, Schwingungs-, Beschleunigungs-und/oder Temperatursensor ist.

3. Vorrichtung nach Anspruch 1 oder 2, **dadurch gekennzeichnet, dass** ein oder mehrere Messkanäle (6) ausgelegt sind zum Verarbeiten von Messsignalen von piezoelektrischen und/oder piezoresistiven Sensoren (4, 5), Dehnmessstreifen und/oder Thermoelementen.

4. Vorrichtung nach einem der vorhergehenden Ansprüche, **dadurch gekennzeichnet, dass** das bewegte System (2) ein rotierendes Werkzeug, eine Turbine, eine Welle, eine Walze, ein Rad eines Fahrzeuges oder ein Roboter ist.

5. Vorrichtung nach einem der vorhergehenden Ansprüche, **dadurch gekennzeichnet, dass** die beiden Telemetrieeinheiten (14, 24) Sender und Empfänger für Fernfeldtelemetrie sind.

6. Vorrichtung nach einem der vorhergehenden Ansprüche, **dadurch gekennzeichnet, dass** jeder Messkanal (6) der Messeinheit (3) einen AD-Wandler (9) umfasst zum Digitalisieren der Messsignale.

7. Vorrichtung nach einem der vorhergehenden Ansprüche, **dadurch gekennzeichnet, dass** mindestens ein Messkanal (6) der Messeinheit (3) eine Bereichsumschaltung (10) zum Anpassen des Messbereichs umfasst, wobei jede Bereichsumschaltung (10) von der Basisstation (21) her telemetrisch konfigurierbar ist.

8. Vorrichtung nach einem der vorhergehenden Ansprüche, **dadurch gekennzeichnet, dass** mindestens ein Messkanal (6) der Messeinheit (3) eine Reset Funktion (11) zum Zurücksetzen des Messkanals (6) und/oder eine Start/Stopp Funktion (12) zum Starten und Stoppen einer Messung umfasst, wobei alle Funktionen (11, 12) von der Basisstation her telemetrisch steuerbar sind.

9. Vorrichtung nach einem der vorhergehenden Ansprüche, **dadurch gekennzeichnet, dass** die Messeinheit (3) ein Energieerzeugungssystem und/oder eine Energiespeichereinheit (13) umfasst zum Speisen der elektronischen Einheit (7) und der ersten Telemetrieeinheit (14).

10. Vorrichtung nach einem der vorhergehenden Ansprüche, **dadurch gekennzeichnet, dass** die Datenverarbeitungseinheit (25) mindestens eine Schnittstelle zu einem Benutzer (27), einer Steuerung (28), einer Auswerteeinheit (29) und/oder einer Speichereinheit (30) aufweist.

11. Vorrichtung nach einem der vorhergehenden Ansprüche, **dadurch gekennzeichnet, dass** die Datenverarbeitungseinheit (25) einen zweiten Prozessor (26) umfasst zum Analysieren der Messdaten sowie zum telemetrischen Überprüfen, Konfigurieren, Bedienen und Steuern der Messeinheit (3).

12. Verfahren zum Aufnehmen von Messsignalen mit einer Messeinheit (3) und zum telemetrischen Übertragen von Messdaten zu einer Basisstation (21), wobei die Basisstation (3) stationär in einem Arbeitsraum (20) angeordnet ist und die Messeinheit (3) fest an einem System (2) angebracht ist, das sich innerhalb dieses Arbeitsraums (20) bewegt, wobei die Messeinheit (3) Messsignale mittels mindestens einem Sensor (4, 5) mit einem oder mehreren Messkanälen (6) erfasst und eine elektronische Einheit (7) mit einem ersten Prozessor (8) die Messsignale zu Messdaten konditioniert und/oder komprimiert, die Messdaten mittels einer ersten Telemetrieeinheit (14) sowie einer ersten Antenne (15) gesendet werden, und wobei die Basisstation (21) mittels einer zweiten Antenne (22) und einer zweiten Telemetrieeinheit (24) die Messdaten empfängt und mit einer Datenverarbeitungseinheit (25) verarbeitet, und wobei Konfigurations- und Steuerdaten von der zweiten Telemetrieeinheit (24) über die zweite Antenne (22) auf die erste Antenne (15) zur ersten Telemetrieeinheit (14) gesendet werden, **dadurch gekennzeichnet, dass** bei der telemetrischen Übertragung (16) die erste Antenne (15) die Messdaten linear polarisiert und die zweite Antenne (22) die Konfigurations- und Steuerdaten zirkular polarisiert oder umgekehrt.

13. Verfahren nach Anspruch 12, **dadurch gekennzeichnet, dass** die Messsignale in einem AD Wandler (9) in der Messeinheit (3) digitalisiert werden.

14. Verfahren nach Anspruch 12 oder 13, **dadurch gekennzeichnet, dass** die Datenverarbeitungseinheit (25) mittels Telemetrie (16) eine Bereichsumschaltung (10) eines Messkanals (6) konfiguriert.

15. Verfahren nach einem der Ansprüche 12 bis 14, **dadurch gekennzeichnet, dass** die Datenverarbeitungseinheit (25) mittels Telemetrie (16) mindestens einen Messkanal (6) der Messeinheit (3) zurücksetzt und/oder eine Messung startet und/oder stoppt.

## Claims

1. A device comprising a measuring unit (3) and a base station (21) for recording measurement signals by the measuring unit (3) and for telemetric transmission of measurement data to the base station (21), wherein for performing a measurement the base station (3) is stationary in a working area (20) and the measuring unit (3) is firmly attached to a system (2) moving within this working area (20), and wherein the measuring unit (3) comprises at least one or more measuring channels (6) to which one or a plurality of sensors (4, 5) can be connected or are connected for receiving the measurement signals, and an electronic unit (7) comprising a first processor (8) for conditioning and/or compressing the measurement signals to obtain measurement data, a first telemetry unit (14) and a first antenna (15) for transmitting measurement data and for receiving configuration and control data, and wherein the base station (21) comprises a second antenna (22) and a second telemetry unit (24) for receiving the measurement data and for sending the configuration and control data, and a data processing unit (25), **characterized in that** the first antenna (15) is a linearly polarized antenna and the second antenna (22) is a circularly polarized antenna or vice versa.

2. The device according to claim 1, **characterized in that** the measuring unit (2) comprises at least one sensor (4, 5), wherein said sensor (4, 5) is a force sensor, pressure sensor, torque sensor, feed force sensor, bending moment sensor, strain sensor, vibration sensor, acceleration sensor and/or temperature sensor.

3. The device according to claim 1 or 2, **characterized in that** one or more measuring channels (6) are configured for processing measurement signals of piezoelectric and/or piezoresistive sensors (4, 5), strain gauges and/or thermocouples.

4. The device according to any of the preceding claims, **characterized in that** the moving system (2) is a rotating tool, a turbine, a shaft, a roller, a wheel of a vehicle or a robot.

5. The device according to any of the preceding claims, **characterized in that** the two telemetry units (14, 24) are far field telemetry transmitters and receivers.

6. The device according to any of the preceding claims, **characterized in that** each measuring channel (6) of the measuring unit (3) comprises an AD converter (9) for digitizing the measurement signals.

7. The device according to any of the preceding claims, **characterized in that** at least one measuring channel (6) of the measuring unit (3) comprises a range switch (10) for adjusting the measurement range, wherein each range switch (10) can be telemetrically configured from the base station (21).

8. The device according to any of the preceding claims, **characterized in that** at least one measuring channel (6) of the measuring unit (3) has a reset function (11) for resetting the measuring channel (6), and/or a start/stop function (12) for starting and stopping a measurement, wherein all functions (11, 12) can be telemetrically controlled from the base station.

9. The device according to any of the preceding claims, **characterized in that** the measuring unit (3) comprises a power generation system and/or an energy storage unit (13) for supplying the electronic unit (7) and the first telemetry unit (14).

10. The device according to any of the preceding claims, **characterized in that** the data processing unit (25) comprises at least one interface to a user (27), a controller (28), an evaluation unit (29) and/or a memory unit (30).

11. The device according to any of the preceding claims, **characterized in that** the data processing unit (25) comprises a second processor (26) for analyzing the measurement data and for telemetrically monitoring, configuring, operating and controlling the measuring unit (3) .

12. A method for recording measurement signals by means of a measuring unit (3) and for telemetric transmission of measurement data to a base station (21), wherein the base station (3) is stationary in a working area (20) and the measuring unit (3) is fixedly attached to a system (2) moving within this working area (20), wherein the measuring unit (3) detects measurement signals by means of at least one sensor (4, 5) having one or more measuring channels (6) and an electronic unit (7) comprising a first processor (8) conditions and/or compresses the measurement signals to obtain measurement data, said measurement data being transmitted by means of a first telemetry unit (14) and a first antenna (15), and wherein the base station (21) receives the measurement data by means of a second antenna (22) and a second telemetry unit (24) and processes them by means of a data processing unit (25), and wherein configuration and control data are transmitted from the second telemetry unit (24) via the second antenna (22) to the first antenna (15) and to the first telemetry unit (14), **characterized in that** in said telemetric transmission (16) the first antenna (15) linearly polarizes the measurement data and the second antenna (22) circularly polarizes the configuration and control data or vice versa.

13. The method according to claim 12, **characterized in that** the measurement signals are digitized in an AD converter (9) in the measuring unit (3).

14. The method according to claim 12 or 13, **characterized in that** the data processing unit (25) configures a range switch (10) of a measuring channel (6) by telemetry (16).

15. The method according to any of claims 12 to 14, **characterized in that** the data processing unit (25) resets at least one measuring channel (6) of the measuring unit (3) and/or starts and/or stops a measurement by telemetry (16).

## Revendications

1. Dispositif comprenant une unité de mesure (3) et une station de base (21) pour détecter des signaux de mesure par l'unité de mesure (3) et pour transmettre des données de mesure à la station de base (21) par télémétrie, dans lequel pour effectuer une mesure, la station de base (3) est stationnaire dans une zone de travail (20) et l'unité de mesure (3) est attachée de manière fixe à un système (2) se déplaçant à l'intérieur de cette zone de travail (20), ladite unité de mesure (3) comprenant au moins un ou plusieurs canaux de mesure (6) auxquels un ou plusieurs capteurs (4, 5) peuvent être connectés ou sont connectés pour recevoir les signaux de mesure, et une unité électronique (7) comprenant un premier processeur (8) pour le traitement et/ou la compression des signaux de mesure en données de mesure, une première unité de télémétrie (14) et une première antenne (15) pour transmettre des données de mesure et pour recevoir des données de configuration et de commande, et dans lequel la station de base (21) comprend une deuxième antenne (22) et un seconde unité de télémétrie (24) pour recevoir les données de mesure et pour transmettre les données de configuration et de commande, et une unité de traitement de données (25), **caractérisé en ce que** la première antenne (15) est une antenne à polarisation linéaire et la seconde antenne (22) est une antenne à polarisation circulaire ou inversement.

2. Dispositif selon la revendication 1, **caractérisé en ce que** l'unité de mesure (2) comprend au moins un capteur (4, 5), dans lequel ledit capteur (4, 5) est un capteur de force, de pression, de couple, de force d'alimentation capteur, de moment de flexion, de contrainte, de vibration, d'accélération et/ou de température.

3. Dispositif selon la revendication 1 ou 2, **caractérisé en ce qu'**un ou plusieurs canaux de mesure (6) sont prévus pour traiter des signaux de mesure de capteurs piézoélectriques et/ou piézorésistifs (4, 5), de jauges de contrainte et/ou de thermocouples.

4. Dispositif selon l'une quelconque des revendications précédentes, **caractérisé en ce que** le système mobile (2) est un outil rotatif, une turbine, un arbre, un rouleau, une roue de véhicule ou un robot.

5. Dispositif selon l'une quelconque des revendications précédentes, **caractérisé en ce que** les deux unités de télémétrie (14, 24) sont des émetteurs et des récepteurs de télémétrie en champ lointain.

6. Dispositif selon l'une quelconque des revendications précédentes, **caractérisé en ce que** chaque canal de mesure (6) de l'unité de mesure (3) comprend un convertisseur AD (9) pour numériser les signaux de mesure.

7. Dispositif selon l'une quelconque des revendications précédentes, **caractérisé en ce qu'**au moins un canal de mesure (6) de l'unité de mesure (3) comprend un commutateur de gamme (10) pour régler la gamme de mesure, dans lequel chaque commutateur de gamme (10) peut être configuré par télémétrie à partir de la station de base (21) .

8. Dispositif selon l'une quelconque des revendications précédentes, **caractérisé en ce qu'**au moins un canal de mesure (6) de l'unité de mesure (3) présente une fonction de réinitialisation (11) pour réinitialiser le canal de mesure (6) et/ou une fonction de démarrage/arrêt (12) pour démarrer et arrêter une mesure, dans laquelle toutes les fonctions (11, 12) peuvent être contrôlées par télémétrie à partir de la station de base.

9. Dispositif selon l'une quelconque des revendications précédentes, **caractérisé en ce que** l'unité de mesure (3) comprend un système de génération d'énergie et/ou une unité de stockage d'énergie (13) pour alimenter l'unité électronique (7) et la première unité de télémétrie (14).

10. Dispositif selon l'une quelconque des revendications précédentes, **caractérisé en ce que** l'unité de traitement de données (25) comprend au moins une interface avec l'utilisateur (27), une commande (28), une unité d'évaluation (29) et/ou une unité de mémoire (30).

11. Dispositif selon l'une quelconque des revendications précédentes, **caractérisé en ce que** l'unité de traitement de données (25) comprend un deuxième processeur (26) pour analyser les données de mesure et pour surveiller, configurer, faire fonctionner et contrôler l'unité de mesure (3) par télémétrie.

12. Procédé d'enregistrement de signaux de mesure avec une unité de mesure (3) et de transmission télémétrique de données de mesure à une station de base (21), la station de base (3) étant stationnaire dans une zone de travail (20) et l'unité de mesure (3) est attachée de manière fixe à un système (2) se déplaçant dans cette zone de travail (20), l'unité de mesure (3) détectant les signaux de mesure au moyen d'au moins un capteur (4, 5) ayant un ou plusieurs canaux de mesure (6), et une unité électronique (7) comprenant un premier processeur (8) conditionne et/ou compresse les signaux de mesure en données de mesure, lesdites données de mesure étant transmises au moyen d'une première unité de télémétrie (14) et d'une première antenne (15), et dans lequel la station de base (21) reçoit les données de mesure au moyen d'une deuxième antenne (22) et d'une deuxième unité de télémétrie (24) et les traite au moyen d'une unité de traitement de données (25), et dans lequel des données de configuration et de commande depuis la deuxième unité de télémétrie (24) sont transmises de la deuxième antenne (22) à la première antenne (15) et à la première unité de télémétrie (14), **caractérisé en ce que** dans ladite transmission télémétrique (16), la première antenne (15) polarise linéairement les données de mesure et la deuxième antenne (22) polarise de manière circulaire les données de configuration et de commande ou inversement.

13. Procédé selon la revendication 12, **caractérisé en ce que** les signaux de mesure sont numérisés dans un convertisseur AD (9) dans l'unité de mesure (3).

14. Procédé selon la revendication 12 ou 13, **caractérisé en ce que** l'unité de traitement de données (25) configure un commutateur de gamme (10) d'un canal de mesure (6) par télémétrie (16).

15. Procédé selon l'une quelconque des revendications 12 à 14, **caractérisé en ce que** l'unité de traitement de données (25) réinitialise au moins un canal de mesure (6) de l'unité de mesure (3) et/ou démarre et/ou arrête une mesure par télémétrie (16).
